# EUROPEAN PATENT APPLICATION

(11) **EP 1 403 792 A1**
(43) Date of publication of application: **31.03.2004**
(21) Application number: 02016479.4
(22) Date of filing: 26.09.2002
(51) Int. Cl.: G06F 17/60, G07F 19/00, G07F 7/10

(54) **A three terminal network for off-line digital electronic payments-network**

(71) Applicant: Callegari, Valentino, Padova (IT)
(72) Inventor: Callegari, Valentino, Padova (IT)

(57) **Abstract**

The ELECTRONIC MONETARY TANSACTION is a rechargeable paying instrument which uses a computer memory. The total value of the purchase is electronically charged on that memory, so that the owner can correctly execute a contract of sale between two parties.

The patent "PAYPHONE" uses, partially or totally, a transmission protocol called Short Message System (SMS) off-line. This means that the customer doesn't have to be connected for the entire period of time needed to complete the transaction.

The patent "PAYPHONE" uses a simple numeric sequence to identify the subject "C".

The patent "PAYPHONE" answers the SMS sent by the subject "C" to certify the transaction.

Procedure for the delivery of the "PAYPHONE" services
Once the act of will on behalf of subject "B" and "C" to subscribe to the "PAYPHONE" services is verified, to complete the monetary transaction, these steps are to be followed:
- subject "C" gives subject "B" its personal ID,
- subject "B" digits on the terminal the value of the transaction and subject "C" 's ID,
- the CLIENT, once received all the instructions, creates a MATRIX and sends it to the SERVER,
- the SERVER processes the MATRIX checking its origin, its total value, the position of subject "C" and if all the parameters have been observed. It then creates the MOA and it sends it to subject "C" 's mobile phone,
- subject "C" accepts the transaction by digiting the PIN CODE and by sending it to the sender (SERVER) - or refuses it by not digiting the PIN CODE -.
- the SERVER verifies that the PIN CODE corresponds to subject "C", addressee of the MOA. If the PIN CODE actually corresponds to subject "C", the monetary transaction is confirmed to the CLIENT,
- when the CLIENT receives the confirmation for the monetary transaction, it prints the receipt.

| **technical problem** | **benefits introduced by the "PAYPHONE" method** |
|---|---|
| The lack of integration between the mobile phone system and electronic monetary transactions | Gathering all the customer's needs in a single system |
| The lack of a paying method alternative to cash for small monetary transactions, due to the high costs of electronic payments | Lowered transaction costs |
| The lack of a secure method of payment between two distant parties | The possibility to use the patented system for an infinite number of applications and a high security degree |
| The low security degree for the subject who wants to personally accept the payment | No need to delegate a third party in the management of the acceptance of the monetary transaction |

## Description

The ELECTRONIC MONETARY TANSACTION is a rechargeable paying instrument which uses a computer memory. The total value of the purchase is electronically charged on that memory, so that the owner can correctly execute a contract of sale between two parties.

The monetary transaction is the object of the patent, and it aims at facilitating the customer when he needs to make a payment in a total security environment.

Another advantage that is obtained with this patent is the security warranted by the fact that the monetary transaction can be executed off-line.

**01.02** - The telephone network is what makes it possible for the patent "PAYPHONE" to reach its goals.

More precisely the global digital mobile telephone network (and by global network we mean the customers network, mobile phones, relays, etc.,) represents the best medium on which to apply this technology. Since mobile phones are widely spread, this patent can offer the payment service at low costs (just as the fact that computers are widely spread, enables to lower the costs of ever more sophisticated software).

The paying method protected by this patent is the one operated by the Short Message System (SMS).

### 02.00 - PREVIOUSLY EXISTING TECHNOLOGIES

**02.01** - The previously existing techniques, as far as most commonly used paying methods are concerned, are:
- Cash
- Other paying methods (checks, etc.)
- Electronic payments

**02.02** - The technologies used for the patent "PAYPHONE" originate from those technologies currently applied to electronic payment methods.

| **object** | **previously existing technologies** | **patent "PAYPHONE"** |
|---|---|---|
| **on/off-line** | The majority of the existing electronic paying methods must be operated on-line. This means that clients must keep the phone connection going for the entire period of time needed to complete the transaction. | The patent "PAYPHONE" uses, partially or totally, a transmission protocol called Short Message System (SMS) off-line. This means that the client doesn't have to be connected for the entire period of time needed to complete the transaction. |
| **client identification** | The majority of the existing electronic paying methods use electronic cards to identify the client. | The patent "PAYPHONE" uses a simple numeric sequence to identify the customer. |
| **client certification** | The majority of the existing electronic paying methods use a PIN CODE or a signature to certify the transaction. | The patent "PAYPHONE" answers the SMS sent by the client to certify the transaction. |

### 03.00 - PRESENTATION OF THE INVENTION

### 03.01 - Terminology:

**03.01.01 -** In order to substitute cash money with another paying method that makes monetary transactions easier, a system that uses the mobile telephone technology has been designed. The procedure consists on an exchange of Short Messages between a server, which operates the payment authorizations, and the client, who asks for them. This technological procedure assures a high degree of security and low management costs. To make this presentation easier, the project has been named "PAYPHONE".

**03.01.02** - The **administrator** of the patent will be hereafter called **subject "A",** and will be considered as the key-subject of the transaction system. Following are its roles:
- administrate information,
- manage money exchanges,
- take care of administrative matters,
- extinguish any kind of intrusions.
The subject "A" is to be considered a corporation.

**03.01.03 -** The **retailer** will be hereafter called **subject "B",** and is identified with that subject who receives a payment extinguished by the "PAYPHONE" method. In order to be able to make use of the transaction service carried out by "PAYPHONE", subject "B" must have a CLIENT. Subject "B" is to be identified by subject "A", after subscribing to the "PAYPHONE" services.

**03.01.04 -** The **customer** will be hereafter called **subject "C",** and is identified with the owner of a mobile phone with a SIM card managed by a telephone company. Subject "C" is identified by subject "A", after subscribing to the "PAYPHONE" services.

**03.01.05 - SERVER:** it is a "central computer" to which the transaction request is sent and which, as per prearranged parameters, decides to accept or to refuse that same request. The SERVER is totally managed and controlled by subject **"A".**

**03.01.06 - CLIENT:** it is a terminal with the following functions:
- gather information through a typing-board or an optical reader (scanner),
- exchange digital data with the server,
- print out all the documents that prove the payment.

**03.01.07 - SMS:** the service Short Message System (SMS) enables one to send and to receive short messages which contain maximum 160 characters to any apt GSM phone. The GSM phone needs to hold a SIM card managed by a telephone company. With the term SMS it is meant to indicate any kind of digital message sent or received by the mobile telephone system.

**03.01.08 - MATRIX:** it's an alphanumeric face (bar code) which identifies: costumer, retailer, value of the transaction, place and time.

**03.01.09 - - PIN CODE:** it is the costumer's personal code. It is assigned by subject "A". The costumer uses the PIN CODE to accept the transaction and to use all the services offered by "PAYPHONE".

**03.01.10 - MOA** (Message Of Acceptance): it is a Short Message created exclusively by the SERVER, who must follow the costumer's instructions in doing so, and which contains the transaction request, complete with all the public transaction data. Example of MOA: - " *Mr. White, do you accept the payment of E. 2,32, requested by the bakery Robinsons, London,* at 12:15 on the 24/04/01?- *to accept the transaction send your PIN CODE to the sender."*

**03.01.11 - ID:** it is the numeric sequence which identifies the customer of the "PAYPHONE" service unequivocally.

### 03.02.01 - Procedure:

The payment method offered by "PAYPHONE" starts with a voluntary act on behalf of subject "B" and of subject "C". The signature of a contract between subjects "B" and "C" represents the necessary condition for the correct execution of the monetary transaction.

Each single monetary transaction is to be considered a voluntary act on behalf of both parties. For this reason the lack of will to conclude the operation on behalf of any one of the two parties, represents an obstacle to the request itself.

### 03.02.02 - Customer identification and activation

Necessary condition to the customer identification and activation, is the act of will on his behalf to subscribe to the "PAYPHONE" services. Once this act of will is verified, the identification and activation of subject "C" is to be considered complete only after its signature of a contract.

### 03.02.03 - retailer identification and activation

Necessary condition to the retailer identification and activation, is the act of will on his behalf to subscribe to the "PAYPHONE" services. Once this act of will is verified, the identification and activation of subject "B" is to be considered complete only after its signature of a contract.

### 03.02.04 - procedure for the delivery of the "PAYPHONE" services

Once the act of will on behalf of subject "B" and "C" to subscribe to the "PAYPHONE" services is verified, to complete the monetary transaction, these steps are to be followed:
- subject "C" gives subject "B" its personal ID,
- subject "B" digits on the terminal the value of the transaction and subject "C" 's ID,
- the CLIENT, once received all the instructions, creates a MATRIX and sends it to the SERVER,
- the SERVER processes the MATRIX checking its origin, its total value, the position of subject "C" and if all the parameters have been observed. It then creates the MOA and it sends it to subject "C" 's mobile phone,
- subject "C" accepts the transaction by digiting the PIN CODE and by sending it to the sender (SERVER) - or refuses it by not digiting the PIN CODE - . The request to accept the charging of the accorded amount through the MATRIX needs to be confirmed within a fixed period of time. Once this period is expired, the transaction is to be considered canceled (nullified),
- the SERVER verifies that the PIN CODE corresponds to subject "C", addressee of the MOA. If the PIN CODE actually corresponds to subject "C", the monetary transaction is confirmed to the CLIENT,
- when the CLIENT receives the confirmation for the monetary transaction, it prints the receipt.

### 03.02.05 - execution of the transaction

Up to this point the two parties involved, have only showed their will to complete the monetary transaction. But to execute that transaction, the physical exchange of money between subject "C" and subject "B" needs to take place. Before exchanging the money, all the information regarding the transactions carried out by the customer during that month are to be gathered. Afterwards the total value of the transaction is transferred from subject "C" to subject "B". Also, a percentage on sales is to be detracted from the total amount of money and to be given to subject "C".

**03.03.01 -** Here follows a chart in which the most important problems in carrying out the whole procedure find a solution:

| **technical problem** | **solution given by the "PAYPHONE" method** | **benefits introduced by the "PAYPHONE" method** |
|---|---|---|
| The lack of integration between the mobile phone system and electronic monetary transactions | An integration between the mobile phone system and electronic monetary transactions | Gathering all the customer's needs in a single system |
| The lack of a paying method alternative to cash for small monetary transactions, due to the high costs of electronic payments | A cost reduction, made possible by the fact that the monetary transmission is carried out off-line | Lowered transaction costs |
| The lack of a secure method of payment between two distant parties | A fast and secure method to certify a payment between two distant parties | The possibility to use the patented system for an infinite number of applications and a high security degree |
| The low security degree for the subject who wants to personally accept the payment | A high security degree guaranteed by the fact that the system uses the customer's mobile phone as a third computer involved in checking all the data | No need to delegate a third party in the management of the acceptance of the monetary transaction |

### 04.01 - DESCRIPTION OF THE DRAW

**01- ID** # subject "C" gives subject "B" its personal ID,
02- MATRIX # the CLIENT, once received all the instructions, creates a MATRIX and sends it to the SERVER
**03- MOA #** the SERVER creates the MOA and it sends it to subject "C" 's mobile phone,
**04- PIN #** subject "C" accepts the transaction by digiting the PIN CODE and by sending it to the sender (SERVER)
**05- CONFIRMATION #** the SERVER verifies that the PIN CODE corresponds to subject "C", addressee of the MOA. If the PIN CODE actually corresponds to subject "C", the monetary transaction is confirmed to the CLIENT

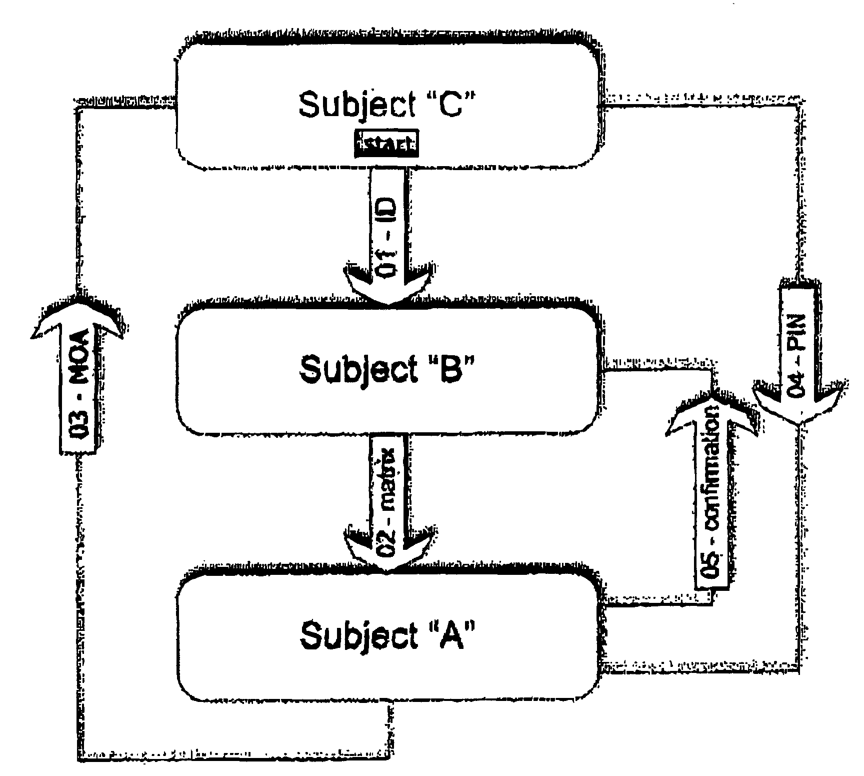

### 05.01 - Description of a self-service monetary transaction

If a customer needs to pay a parking-meter in order to park his car, and if the parking-meter has been enabled to deliver the "PAYPHONE" services, the customer will have to digit on the parking-meter the amount of time during which he wants his car parked in that area and then his ID, confirming all the digited data. After a few seconds he will receive on his mobile phone an MOA with a text similar to this example: - *- "Mr.* White, *do you accept the payment of E. 4,02 requested by the Parking-meter n. 120, London, at 12:15 on the 24*/*04*/*01? - to accept the transaction send your PIN CODE to the sender.* " -. At this point the customer decides weather or not to accept the payment simply by sending his PIN CODE to the sender of the MOA and the parking-meter will then print the receipt.

### 05.02 - Description of a monetary transaction between customer and retailer:

If a customer needs to pay cigarettes to a retailer enabled to deliver the "PAYPHONE" services, he will have to give the retailer his ID. The retailer will then digit (through the typing-board) the customer's ID and the total value of the transaction, thus sending the MATRIX to the SERVER. After a few seconds an MOA will reach the customer's mobile phone. This MOA will be similar to this example: - *"Mr. White, do you accept the payment* of *E.2,09* requested *by the shop Anthony's Tobacco, London, at 12:15 on the 24*/*04*/*0? - to accept the transaction send your PIN CODE to the sender"* -. At this point the customer decides weather or not to accept the payment simply by sending his PIN CODE to the sender of the MOA and the customer will then print the receipt.

### 05.03 - Description of a monetary transaction carried out through the Internet:

If a customer decides to buy a ticket for a concert on an Internet site enabled to deliver the "PAYPHONE" services, the customer will have to fill in a FORM to require the services, digit his ID and finally confirm the data. After a few seconds MOA will reach the customer's mobile phone. This MOA will be similar to this example: - **07.05** - *"Mr. White, do you accept the payment of E. 12,97 requested by tickets ONLINE, London, at 12:15 on the 24*/*04*/*0? - **07.05** - to accept the transaction send your PIN CODE to the sender"* -. At this point the customer decides weather or not to accept the payment simply by sending his PIN CODE to the sender of the MOA. Right afterwards he will have a confirmation of the correct payment execution from the webmaster, and on the screen a sentence similar to the following example will appear: *" correctly executed transaction - print* this page *as* a *receipt"*

**05.04 - The patent will become operative only if industrialized**, as its wide diffusion on the territory and the managing of a high number of "PAYPHONE" points, are he necessary conditions for the patent chance to survive itself.

Since the technologies used by the "PAYPHONE" method are already widely spread, and since it doesn't call for any sophisticated methods to implement the use of the patent itself, its industrial production seems to be easily planned.

## Claims

1. We claim the exclusive right to use the data circulation process, within the competence of the monetary transactions, described as follows. By data circulation process we mean the transfer of data from different terminals between three different subjects (subject "A", subject "B" and subject "C"). The data circulation process is operated as follows:
a. outgoing procedure: the data is transferred from subject "C" 's terminal (the customer's mobile phone) to subject "A" 's terminal, and then from subject "A" 's terminal to subject "C" 's terminal
b. incoming procedure: the data is transferred from subject "C" 's terminal (the customer 's mobile phone) to subject's "A" 's terminal, and then from subject "A" 's terminal to subject "B" 's (CLIENT) terminal.
The patented data circulation process is to be considered complete exclusively when the transmission of data to and from subject "C" is operated via the SMS technology.

2. We claim the exclusive right to operate an electronic payment method in which subject "C" notifies his acceptance of any payment by replying (via SMS) to an SMS sent by subject "A".

3. We claim the exclusive right to commercialize the patented system called "PAYPHONE" on the territories of the countries in which the patent is protected.

4. We claim the exclusive right to apply the data circulation process (as described in claim n. 1) to any kind of monetary transaction.

5. We claim the exclusive right to apply the previously described data circulation process (***** as per patent presentation) to any subject "B" and subject "C" resident on the EU territory. We thus ask that the data circulation process (as described in claim n. 1) will not be operated in the EU territory, even when the SERVER and subject "A" are not physically inside the EU territory.

6. We claim the exclusive ownership of the SERVER and of the CLIENT as described in this presentation, and exclusively for the purposes described in this presentation of the utility patent "PAYPHONE".
